# EUROPÄISCHE PATENTANMELDUNG

(11) **EP 2 736 150 A2**
(43) Veröffentlichungstag der Anmeldung: **28.05.2014**
(21) Anmeldenummer: 13005172.5
(22) Anmeldetag: 31.10.2013
(51) Int. Cl.: H02K 7/10, H02K 7/112, F16D 37/02

(54) **Linearantrieb**

(30) Priorität: 21.11.2012 DE 102012022798
(71) Anmelder: Maxon Motor AG, 6072 Sachseln (CH)
(72) Erfinder: Pittini, Raniero, 6052 Hergiswil (CH); Busse-Grawitz, Max Erick, 6055 Alpnach Dorf (CH); Roulet, Mathieu, 6003 Luzern (CH)
(74) Vertreter: Grünecker, Kinkeldey, Stockmair & Schwanhäusser

(57) **Zusammenfassung**

Die vorliegende Erfindung betrifft einen Linearantrieb mit einem Stator, einem Läufer, und mit zwei zum Antrieb des Läufers vorgesehenen rotativen Antriebseinheiten. Erfindungsgemäß ist vorgesehen, dass der Linearantrieb zwei magnetorheologische Kupplungen umfasst, wobei die erste Antriebseinheit mittels einer ersten magnetorheologischen Kupplung und die zweite Antriebseinheit mittels einer zweiten magnetorheologischen Kupplung mit dem Läufer koppelbar sind. Das Abtriebsdrehmoment der ersten Antriebseinheit wirkt dabei gegenläufig zum Abtriebsdrehmoment der zweiten Antriebseinheit auf den Läufer.

## Beschreibung

Die vorliegende Erfindung betrifft einen Linearantrieb mit einem Stator, einem Läufer, und mit zwei zum Antrieb des Läufers vorgesehenen rotativen Antriebseinheiten.

Ein Linearantrieb der eingangs genannten Art ist beispielsweise aus DE 199 33 234 A1 bekannt. Der dort beschriebene Linearantrieb umfasst eine drehbar gelagerte Spindel, die zum Antrieb eines in Achsrichtung der Spindel beweglich gelagerten Schlittens dient. Die Spindel wird von zwei Elektromotoren angetrieben, die an gegenüberliegenden Enden der Spindel angeordnet sind. Die beiden Elektromotoren haben stets die gleiche Drehrichtung. Das Drehmoment, welches auf die Spindel wirkt, wird somit zu gleichen Anteilen von den beiden Elektromotoren erzeugt. Durch die Verwendung von zwei Elektromotoren anstatt eines einzigen Elektromotors soll ein kompakter Aufbau des Linearantriebs ermöglicht, die Motorgröße reduziert und der Schwingungslärm vermindert werden.

Aus DE 100 46 137 A1 ist ein Linearantrieb bekannt, bei dem zwei Antriebseinheiten abwechselnd mit dem Läufer des Linearantriebs gekoppelt werden, um so eine kontinuierliche Bewegung des Läufers zu erreichen. Die beiden Antriebe können beispielsweise als bistabile Hubmagnete, Hubmagnete mit passiver Rückstellfeder, Piezowandler, pneumatische Zylinder oder SMA-Aktuatoren ausgeführt sein. Die Kraftkupplung zwischen den Antrieben und dem Läufer kann mittels eines magnetischen Koppelmechanismus, mit Hilfe elektrostatischer Anziehungskräfte, oder über entsprechend ausgebildete mechanische Anordnungen erfolgen. Im Zusammenhang mit der Kraftkopplung ist allgemein auch die Rede von Reibungskräften, magnetischen und elektrostatischen Kräften, sich in ihrer Viskosität oder Elastizität ändernden Medien und sich ändernden chemischen Bindungskräften.

Viele Einsatzzwecke von Linearmotoren erfordern heutzutage hochdynamische Antriebe, die zudem steigenden Anforderungen hinsichtlich einer kompakten Bauweise unterliegen.

Aufgabe der vorliegenden Erfindung ist es daher, einen Linearantrieb der eingangs genannten Art anzugeben, der hochdynamisch ist, sich leicht steuern lässt, und eine kompakte Bauweise aufweist.

Die Aufgabe wird gelöst durch die Merkmale des unabhängigen Anspruchs 1. Demnach liegt bei einem Linearantrieb der eingangs genannten Art dann eine erfindungsgemäße Lösung der Aufgabe vor, wenn der Linearantrieb ferner zwei magnetorheologische Kupplungen umfasst, wobei die erste Antriebseinheit mittels einer ersten magnetorheologischen Kupplung und die zweite Antriebseinheit mittels einer zweiten magnetorheologischen Kupplung mit dem Läufer koppelbar sind, wobei das Abtriebsdrehmoment der ersten Antriebseinheit entgegengesetzt zum Abtriebsdrehmoment der zweiten Antriebseinheit auf den Läufer wirkt.

Bei dem erfindungsgemäßen Linearantrieb drehen die Abtriebswellen der beiden Antriebseinheiten somit in der Regel gegenläufig. Jedenfalls bewirken die beiden Antriebseinheiten entgegengesetzt auf den Läufer wirkende Antriebskräfte. Dies bedeutet nicht, dass die beiden Abtriebswellen koaxial zueinander angeordnet sein müssen. Das Abtriebsdrehmoment der beiden Antriebseinheiten kann direkt auf den Läufer wirken, es kann aber auch über eine geeignete Mechanik in eine auf den Läufer wirkende Kraft umgesetzt werden. Zur Umsetzung der rotativen Bewegung in eine translatorische Bewegung des Läufers können unterschiedliche mechanische Anordnungen vorgesehen sein. Der Läufer des Linearantriebs ist so gelagert, dass er, oder zumindest ein Teil des Läufers, gegenüber dem Stator translatorisch bewegt werden kann. Beispielsweise kann der Läufer ein Riemen sein, welcher eine geschlossene Schleife bildet und derart eingespannt ist, dass er in einem bestimmten Abschnitt stets geradlinig verläuft.

Durch die beiden magnetorheologischen Kupplungen und die gegenläufigen Abtriebsdrehmomente der beiden Antriebseinheiten wird ein hochdynamischer Betrieb des Linearantriebs ermöglicht. Insbesondere kann dadurch eine hochdynamische Richtungsumkehr des Läufers erreicht werden. Das tatsächlich anliegende Abtriebsdrehmoment einer Antriebseinheit kann durch Anlegen einer steuerbaren Spannung an die jeweilige magnetorheologische Kupplung stufenlos eingestellt werden. Soll beispielsweise eine Richtungsumkehr des Läufers erfolgen, so wird die bisher in Eingriff befindliche Antriebseinheit mittels der magnetorheologischen Kupplung ausgekuppelt und die andere Antriebseinheit eingekuppelt. Der Läufer wird dadurch sofort abgebremst bzw. in die Gegenrichtung beschleunigt. Zur Umkehr der Bewegungsrichtung müssen lediglich die Trägheitsmomente des Läufers und die Trägheitsmomente der gegebenenfalls zwischen den Kupplungen und dem Läufer vorgesehenen Mechanik überwunden werden. Eine Abbremsung bzw. Beschleunigung der beiden Antriebseinheiten ist hingegen nicht erforderlich. Diese behalten sowohl ihre Drehrichtung als auch ihre Drehbewegung bei. Die Erfindung hat ferner den Vorteil, dass auf einfache Art und Weise eine Verringerung des mechanischen Spiels erreicht werden kann. Dies kann dadurch geschehen, dass an die magnetorheologische Kupplung derjenigen Antriebseinheit, die der momentanen Bewegungsrichtung des Läufers entgegenwirkt, eine geringe Spannung angelegt wird, so dass auch durch diese Antriebseinheit ein geringes Abtriebsdrehmoment auf den Läufer wird. Dadurch wird zwar das resultierende Abtriebsdrehmoment der anderen Antriebseinheit etwas reduziert. Der Vorteil besteht darin, dass dadurch eine mechanische Verspannung des Antriebs hervorgerufen wird, die wiederum zu einer Reduzierung des mechanischen Spiels führt.

Vorzugsweise kann vorgesehen sein, dass sich die Abtriebswellen der beiden Antriebseinheiten über den gesamten Betriebsbereich des Linearantriebs stets mit konstanter Geschwindigkeit drehen. Auch ist es von Vorteil, wenn die Antriebseinheiten jeweils nur eine Drehrichtung haben. Dies vereinfacht die Steuerung des Linearantriebs.

Vorteilhafte Ausgestaltungen der vorliegenden Erfindung sind Gegenstand der Unteransprüche.

In einer bevorzugten Ausführungsform der vorliegenden Erfindung umfasst der Linearantrieb einen Elektromotor, der sowohl Teil der ersten Antriebseinheit als auch Teil der zweiten Antriebseinheit ist, wobei der Linearantrieb ferner ein mit dem Elektromotor verbundenes Getriebe aufweist. Das Getriebe umfasst vorzugsweise zwei gegenläufig drehende Getriebeabtriebswellen, wovon eine erste Getriebeabtriebswelle mit der ersten magnetorheologischen Kupplung, und eine zweite Getriebeabtriebswelle mit der zweiten magnetorheologischen Kupplung gekoppelt ist. Bei dieser Ausführungsform wird lediglich ein einziger Elektromotor benötigt, der für beide Antriebseinheiten das benötigte Abtriebsdrehmoment zur Verfügung stellt. Vorzugsweise werden die beiden Getriebeabtriebswellen stetig durch den Elektromotor angetrieben. Die letztendlich auf den Läufer des Linearantriebs übertragene Antriebskraft wird somit rein durch die Ansteuerung der beiden magnetorheologischen Kupplungen erreicht. Da der Linearantrieb in dieser Ausführungsform mit einem einzigen Elektromotor auskommt, ist er sehr günstig in der Herstellung und lässt sich zudem auch einfach steuern. Auch ermöglicht diese Ausführungsform eine kompakte Bauweise bei gleichzeitig geringem Gewicht des Linearantriebs.

In einer alternativen Ausführungsform der vorliegenden Erfindung umfassen die beiden Antriebseinheiten jeweils einen eigenen Elektromotor. Diese Ausführungsform erlaubt einen äußerst flexiblen Aufbau und eignet sich insbesondere dann, wenn sich die Abtriebswellen der beiden Antriebseinheiten an völlig unterschiedlichen Einbaupositionen befinden. Ganz besonders bevorzugt umfassen die beiden Antriebseinheiten dabei nicht nur jeweils einen eigenen Elektromotor sondern jeweils auch ein eigenes Getriebe. Als Getriebe kommen bevorzugt Untersetzungsgetriebe zum Einsatz. Diese ermöglichen hohe Drehmomente bei kompakter Bauweise der Motoren. Dadurch ergibt sich insgesamt eine kompakte und günstige Bauweise des Linearantriebs.

In einer weiteren besonders bevorzugten Ausführungsform der vorliegenden Erfindung umfasst der Linearantrieb eine Steuereinheit zur Ansteuerung der beiden magnetorheologischen Kupplungen, wobei die Steuereinheit dafür sorgt, dass stets durch beide Antriebseinheiten ein Abtriebsdrehmoment auf den Läufer wirkt. Dabei ist es von besonderem Vorteil, wenn die Steuerung dafür sorgt, dass die magnetorheologische Kupplung der eigentlich in Eingriff befindlichen Antriebseinheit vollständig geschlossen ist, wobei die magnetorheologische Kupplung der jeweils anderen Antriebseinheit nur eine geringe Kraftübertragung auf den Läufer bewirkt. Dadurch findet eine mechanische Verspannung des Läufersystems statt, die zu einer Verringerung des mechanischen Spiels führt. Diese Ausführungsform liefert somit einen hochpräzisen Linearantrieb.

Die Präzision der Steuerung des Linearantriebs wird weiter verbessert bzw. vereinfacht, wenn die Steuereinheit einen Istwertgeber, insbesondere einen Drehgeber und/oder Tachometer und/oder Beschleunigungsmesser, umfasst. Dadurch kann die tatsächliche Bewegung des Läufers mit den Sollvorgaben abgeglichen werden. Der Istwertgeber kann an unterschiedlichen Positionen des Linearantriebs vorgesehen sein. Vorzugsweise findet die Messung entweder direkt am Läufer statt und/oder an den Abtriebswellen der beiden Antriebseinheiten. Entsprechende Istwertgeber können auch an den Motorwellen der Elektromotoren vorgesehen sein.

In einer weiteren Ausführungsform der vorliegenden Erfindung umfasst der Läufer eine Zahnstange, die durch ein mit der ersten Antriebseinheit koppelbares erstes Zahnrad oder Schneckenrad, und durch ein mit der zweiten Antriebseinheit koppelbares zweites Zahnrad oder Schneckenrad angetrieben ist. Bei dieser Ausführungsform wird ein äußerst robuster und präziser Linearantrieb erreicht. Auch erlaubt diese Ausführungsform eine kompakte Bauweise, insbesondere wenn erste magnetorheologische Kupplung und zweite magnetorheologische Kupplung direkt nebeneinander angeordnet sind. Es kann ein einziger Elektromotor vorgesehen sein, durch den die Abtriebswellen beider Antriebseinheiten angetrieben werden, oder jede der beiden Antriebseinheiten kann durch einen eigenen Elektromotor angetrieben werden. In beiden Fällen werden die Zahnräder bzw. Schneckenräder mittels der beiden magnetorheologischen Kupplungen mit den zugehörigen Antriebseinheiten gekoppelt.

In einer weiteren alternativen Ausführungsform der vorliegenden Erfindung umfasst der Läufer einen Riemen oder ein Seil oder eine Kette. Vorzugsweise bilden Riemen, Seil oder Kette eine geschlossene Schleife, wobei die beiden Antriebseinheiten in zwei einander gegenüberliegenden Umkehrpunkten der Schleife angeordnet sind. Ein geradlinig zwischen den beiden Umkehrpunkten verlaufender Abschnitt der Schleife bildet dabei den eigentlichen Läufer. Dieser Abschnitt kann durch die beiden Antriebseinheiten stets auf Spannung gehalten werden, so dass das mechanische Spiel des Linearantriebs reduziert wird. Neben dem Riemen oder der Kette oder dem Seil kann der Läufer des Linearantriebs auch noch weitere Teile umfassen. Beispielsweise kann ein mit dem Riemen, dem Seil oder der Kette verbundener Schlitten vorgesehen sein, der über eine Linearführung geführt ist.

In einer weiteren alternativen Ausführungsform der vorliegenden Erfindung umfasst der Linearantrieb eine Gewindespindel. Linearantriebe mit Gewindespindelantrieb sind äußerst robust, einfach im Aufbau, und können äußerst präzise gesteuert werden.

Das mechanische Spiel derartiger Linearantriebe kann durch die Verwendung von gegeneinander verspannten Spindelmuttern reduziert bzw. ausgeschaltet werden. Es ist denkbar, dass die Gewindespindel selbst den Läufer oder einen Teil des Läufers bildet. Die Gewindespindel ist hierzu drehfest und axial verschieblich gegenüber dem Stator des Linearantriebs gelagert ist. Vorzugsweise dient die Gewindespindel jedoch lediglich der Umsetzung der rotativen Bewegung in eine lineare Bewegung des Läufers. In diesem Fall ist die Gewindespindel drehbar und axial unverschieblich gegenüber dem Stator des Linearantriebs gelagert, wobei die Gewindespindel mit zumindest einer der beiden Antriebseinheiten und dem gegenüber dem Stator axial verschieblich gelagerten Läufer in Eingriff steht. Der Läufer selbst kann wiederum als Schlitten ausgebildet sein, welcher über eine Linearführung am Stator des Linearantriebs verfügt. Im einfachsten Fall ist lediglich eine Gewindespindel vorgesehen, die mit beiden Antriebseinheiten über die jeweils zugehörigen magnetorheologischen Kupplungen gekoppelt werden kann.

In einer besonders bevorzugten Ausführungsform umfasst der Linearantrieb eine zweite Gewindespindel, die parallel zur ersten Gewindespindel verläuft und ebenfalls drehbar und axial unverschieblich gegenüber dem Stator des Linearantriebs gelagert ist, wobei die erste Gewindespindel mit dem Läufer und der ersten Antriebseinheit, und die zweite Gewindespindel mit dem Läufer und der zweiten Antriebseinheit in Eingriff steht. Der Eingriff zwischen Gewindespindel und erster bzw. zweiter Antriebseinheit wird über die beiden magnetorheologischen Kupplungen gesteuert. Bei dieser Ausführungsform kann auf einfache Weise mittels der beiden Gewindespindeln eine Verspannung des Systems erreicht werden. Die Verspannung wiederum führt zur Spielfreiheit des Linearantriebs.

In einer weiteren bevorzugten Ausführungsform sind die magnetorheologischen Kupplungen jeweils durch ein Differential mit magnetorheologischer Bremse realisiert, wobei das Differential ein Eingangsglied und zwei Ausgangsglieder umfasst, und wobei eines der Ausgangsglieder mittels der magnetorheologischen Bremse abbremsbar ist. Das gebremste Ausgangsglied ist dabei in der Regel ungenutzt, wohingegen das jeweils andere Ausgangsglied vorzugsweise mit dem Läufer gekoppelt ist. Als Differential kann ein herkömmliches Differentialgetriebe dienen. Diese Ausführungsform lässt sich besonders einfach realisieren und hat den Vorteil, dass die stromführenden Teile der magnetorheologischen Bremse feststehend ausgeführt werden können. Eine aufwendige schleifende Stromübertragung kann daher entfallen.

Ausführungsbeispiele der vorliegenden Erfindung werden im Folgenden anhand von Zeichnungen näher erläutert. Es zeigen:
- Fig. 1: eine schematische Draufsicht auf einem erfindungsgemäßen Linearantrieb gemäß einem ersten Ausführungsbeispiel,
- Fig. 2: eine Seitenansicht des erfindungsgemäßen Linearantriebs aus Fig. 1,
- Fig. 3: eine schematische Draufsicht eines erfindungsgemäßen Linearantriebs gemäß eines zweiten Ausführungsbeispiels,
- Fig. 4: eine Seitenansicht des erfindungsgemäßen Linearantriebs aus Fig. 3,
- Fig. 5: eine schematische Draufsicht auf den erfindungsgemäßen Linearantrieb aus den Fig. 3 und 4 in abgewandelter Form,
- Fig. 6: eine schematische Darstellung eines erfindungsgemäßen Linearantriebs gemäß einem weiteren Ausführungsbeispiel,
- Fig. 7: eine schematische Darstellung einer Variante des erfindungsgemäßen Linearantriebs aus Fig. 6,
- Fig. 8: eine schematische Darstellung einer weiteren Variante des erfindungsgemäßen Linearantriebs aus Fig. 6,
- Fig. 9: eine schematische Darstellung eines erfindungsgemäßen Linearantriebs gemäß eines weiteren Ausführungsbeispiels,
- Fig. 10: eine schematische Darstellung einer Variante des Linearantriebs aus Fig. 9,
- Fig. 11: eine schematische Darstellung einer weiteren Variante des Linearantriebs aus Fig. 9.

Für die folgenden Ausführungen gilt, dass gleiche Teile durch gleiche Bezugszeichen bezeichnet werden. Sofern in einer Zeichnung Bezugszeichen enthalten sind, die in der zugehörigen Figurenbeschreibung nicht erläutert werden, so wird auf vorangehende oder nachfolgende Figurenbeschreibungen Bezug genommen.

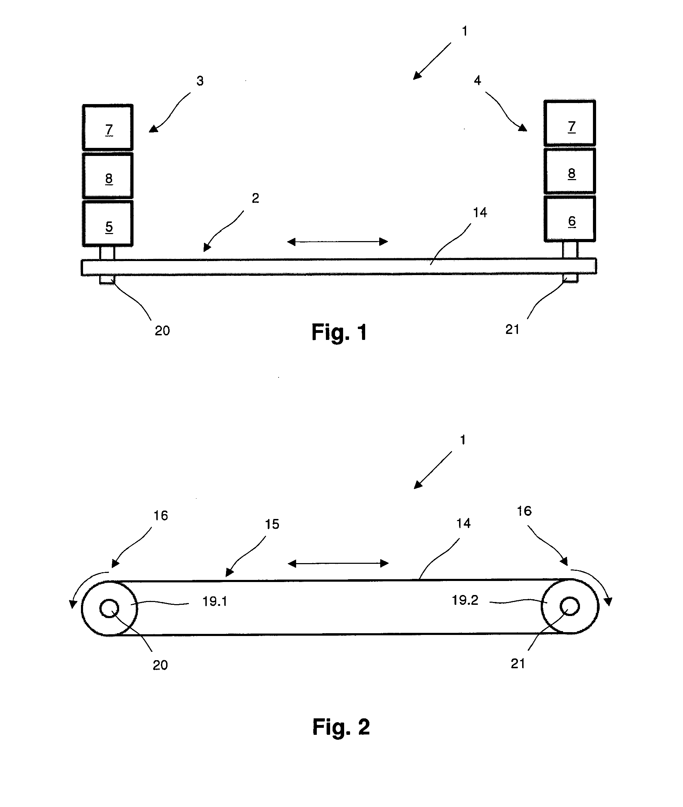

Fig. 1 zeigt eine schematische Darstellung eines erfindungsgemäßen Linearantriebs 1, welcher als Riemenantrieb ausgebildet ist. In Fig. 1 ist eine Draufsicht gezeigt, Fig. 2 zeigt die zugehörige Seitenansicht. Bei dieser Variante des erfindungsgemäßen Linearantriebs wird der Läufer 2 durch einen Riemen 14 gebildet, der wahlweise durch die die beiden Antriebseinheiten 3 und 4 angetrieben werden kann. Der Riemen 14 bildet eine geschlossene Schleife 15, in deren Umkehrpunkten 16 die Antriebsräder 19.1, 19.2 der beiden Antriebseinheiten 3 und 4 angeordnet sind. Der Riemen 14 wird durch die beiden Antriebsräder auf Spannung gehalten. Jede der beiden Antriebseinheiten 3 und 4 umfasst einen Elektromotor 7 sowie ein daran angesetztes Untersetzungsgetriebe 8. Dieser Aufbau der Antriebseinheiten führt zu einer kompakten Bauweise des Linearantriebs, da aufgrund der Untersetzungsgetriebe relativ leistungsschwache und dadurch kleine Elektromotoren zum Einsatz verwendet werden können, wenngleich dennoch hohe Drehmomente bereitgestellt werden. Die beiden mit dem Riemen 14 in Eingriff befindlichen Antriebsräder 19.1, 19.2 sind nicht direkt mit den Antriebseinheiten 3 und 4 verbunden. Sie sitzen auf Antriebswellen, die jeweils über eine magnetorheologische Kupplung mit der zugehörigen Antriebseinheit gekoppelt werden können. Die links gezeigte Antriebswelle 20 kann mittels der magnetorheologischen Kupplung 5 mit der Getriebeabtriebswelle der ersten Antriebseinheit 3 gekoppelt werden, die Antriebswelle 21 auf der rechten Seite ist über die magnetorheologische Kupplung 6 mit der zweiten Antriebseinheit 4 koppelbar. Die beiden parallel ausgerichteten Abtriebswellen der beiden Antriebseinheiten 3 und 4 drehen sich stets gegenläufig. Das bedeutet, dass sich das Antriebsrad 19.1 in der Darstellung aus Fig. 2 gegen den Urzeigersinn dreht, sobald die Antriebswelle 20 über die magnetorheologische Kupplung 5 mit der ersten Antriebseinheit 3 verbunden ist, wohingegen sich das Antriebsrad 19.2 im Urzeigersinn dreht, wenn die Antriebswelle 21 über die magnetorheologische Kupplung 6 mit der zweiten Antriebseinheit 4 gekoppelt ist. Durch gleichzeitiges Lösen der ersten magnetorheologischen Kupplung und Schließen der zweiten magnetorheologischen Kupplung findet somit eine Umkehr der Bewegungsrichtung des Läufers statt. Durch Anlegen einer steuerbaren Spannung an die beiden magnetorheologischen Kupplungen können diese auch teilweise geöffnet bzw. geschlossen werden. Wenn beide Kupplungen 5 und 6 teilweise geschlossen sind, bestimmt sich die Bewegungsrichtung des Läufers dadurch, an welcher der beiden Antriebswellen 20, 21 das größere Drehmoment anliegt. In diesem Fall wird der in Figur 2 gezeigte obere Abschnitt des Antriebsriemens 14 unter Spannung gehalten. Auch die übrigen Antriebskomponenten werden dadurch gegeneinander verspannt, sodass das mechanische Spiel des Linearantriebs zum Großteil ausgeschaltet, bzw. reduziert wird. Für eine hohe Präzision des Linearantriebs ist es daher von Vorteil, wenn an die beiden magnetorheologischen Kupplungen 5 und 6 stets eine zumindest geringe Spannung angelegt wird.

Die Elektromotoren der beiden Antriebseinheiten 3 und 4 können ihre Drehrichtung und Drehgeschwindigkeit zu jeder Zeit beibehalten. Für eine Umkehr der Bewegungsrichtung des Läufers muss daher nicht auch die Drehrichtung der beiden Elektromotoren geändert werden. Deshalb müssen bei einer Umkehr der Bewegungsrichtung des Läufers auch keine Trägheitsmomente der Elektromotoren oder der daran angesetzten Untersetzungsgetriebe überwunden werden.

Es wird darauf hingewiesen, dass es sich bei den Figuren lediglich um schematische Darstellungen handelt. So ist beispielsweise der Stator des Linearantriebs nicht gezeigt. Auch kann der Läufer 2 des erfindungsgemäßen Linearantriebs neben dem Riemen 14 zusätzliche Bauteile enthalten, beispielsweise einen Schlitten, der mit dem Riemen 14 verbunden und in einer Linearführung geführt ist. Der Riemen kann beispielsweise als Zahnriemen ausgeführt sein. Anstatt des Riemens können auch eine Kette oder ein Seil zum Einsatz kommen.

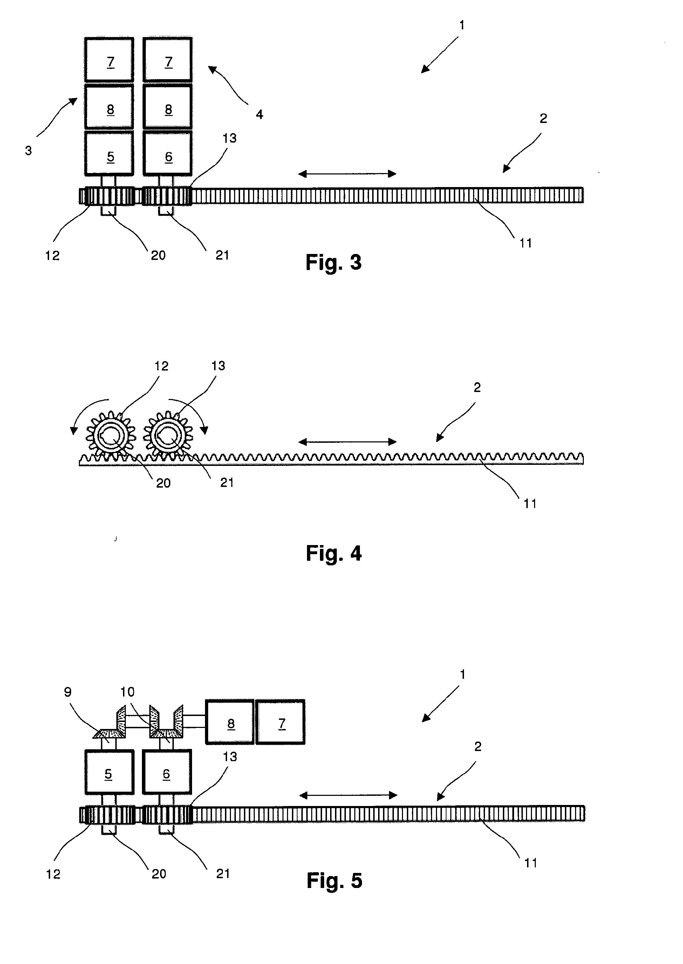

Die Fig. 3 und 4 zeigen ein weiteres Ausführungsbeispiel des erfindungsgemäßen Linearantriebs. Fig. 3 zeigt eine schematische Draufsicht, Fig. 4 eine Seitenansicht. Auch hier sind, ähnlich wie bei dem Linearantrieb aus den Fig. 1 und 2, zwei Antriebseinheiten 3 und 4 zum Antrieb des Läufers 2 vorgesehen. Dieser wird durch eine Zahnstange 11 gebildet. Sie ist mittels nicht gezeigter Lagervorrichtungen in Richtung ihrer Längsachse axial verschieblich am Stator des Linearantriebs gelagert. Die beiden Antriebswellen 20 und 21 tragen bei diesem Linearantrieb jeweils ein Zahnrad 12, 13. Beide Zahnräder kämmen mit der Verzahnung der Zahnstange. Auch bei diesem Antrieb sind die Drehrichtungen der beiden Getriebeabtriebswellen, bzw. die Abtriebdrehmomente der beiden Antriebswellen 20 und 21 gegenläufig. Die beiden Antriebseinheiten 3, 4 und insbesondere die beiden magnetorheologischen Kupplungen 5 und 6 sind direkt nebeneinander angeordnet, wodurch eine sehr kompakte Bauweise des Linearantriebs 1 erreicht wird. Das grundlegende Prinzip des Linearantriebs entsprich ansonsten dem Prinzip des in den Fig. 1 und 2 gezeigten Linearantriebs.

Fig. 5 zeigt den erfindungsgemäßen Linearantrieb aus den Fig. 3 und 4 in leicht abgewandelter Form. Da die beiden magnetorheologischen Kupplungen, bzw. die mit den Kupplungen verbundenen Antriebswellen 20 und 21 direkt nebeneinander angeordnet sind, ist es auch möglich, die beiden separaten Antriebseinheiten 3 und 4 aus Fig. 3 durch einen einzigen Elektromotor 7 und ein daran angesetztes Getriebe 8 mit zwei Getriebeabtriebswellen 9 und 10 abzubilden. Das Getriebe 8 ist so ausgelegt, dass die Drehrichtung der Getriebeabtriebswelle 9 gegenläufig zur Drehrichtung der Getriebeabtriebswelle 10 ist. Auch bei dieser Antriebsvariante bestimmt sich die Bewegungsrichtung des Läufers 2 allein aufgrund der jeweils an den beiden Antriebswellen 20 und 21 anliegenden Drehmomente. Das Drehmoment wird über die Steuerspannung der beiden magnetorheologischen Kupplungen 5 und 6 eingestellt.

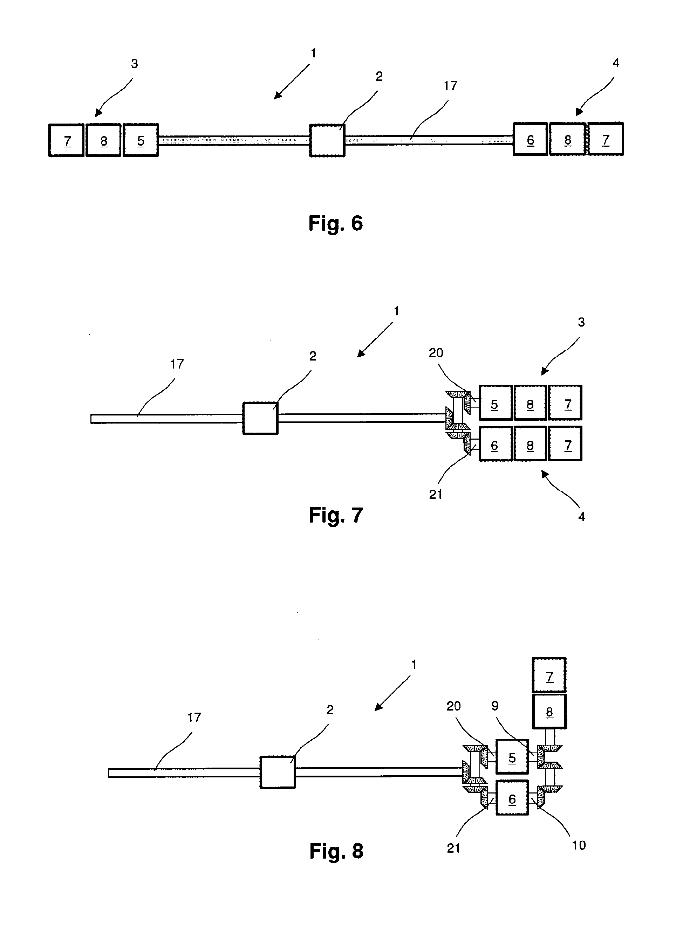

Fig. 6 zeigt ein weiteres Ausführungsbeispiel des erfindungsgemäßen Linearantriebs. Bei dieser Variante kommt ein Spindelantrieb zum Einsatz. Die Spindel 17 ist drehbar und axial unverschieblich am Stator des Linearantriebs 1 gelagert. Sie steht mit einem entsprechenden Gewinde des Läufers 2 in Eingriff, sodass sich der Läufer entlang der Spindelachse bewegt sobald sich die Spindel dreht. Der Läufer 2 ist daher nicht drehbar, sondern lediglich axial verschieblich am Stator des Linearantriebs gelagert. An den beiden Enden der Gewindespindel 17 ist jeweils eine Antriebseinheit 3, 4 vorgesehen. Die Antriebseinheiten 3 und 4 erzeugen ein gegenläufiges Drehmoment und können jeweils mittels einer magnetorheologischen Kupplung 5, 6 mit der Spindel selbst gekoppelt werden. Der in Fig. 6 gezeigte Antrieb zeichnet sich durch eine sehr schmale Bauweise aus, er baut jedoch relativ lang.

Fig. 7 zeigt eine Variante des in Fig. 6 gezeigten Linearantriebs, bei der beide Antriebseinheiten 3 und 4 am selben Ende der Gewindespindel angeordnet sind. Im gezeigten Beispiel sind die beiden Antriebswellen 20 und 21 über einen Zahnradeingriff mit der Gewindespindel 17 gekoppelt. Es ist jedoch auch möglich, die beiden magnetorheologischen Kupplungen 5 und 6 koaxial zueinander anzuordnen, sodass die Gewindespindel 17 die Ausgangswelle beider magnetorheologischen Kupplungen bildet. Der in Fig. 7 gezeigte Linearantrieb baut etwas kürzer als der Linearantrieb aus Fig. 6. Er ist dafür nicht so schmal.

Fig. 8 zeigt eine weitere Abwandlung. Im Unterschied zu dem Ausführungsbeispiel aus Fig. 7 sind dort die beiden Antriebseinheiten 3 und 4, ähnlich wie bei dem Linearantrieb aus Fig. 5, durch einen einzigen Elektromotor 7 mit angesetztem Getriebe 8 realisiert. Auch hier hat das Getriebe zwei Getriebeabtriebswellen 9 und 10, die stets gegenläufig zueinander drehen.

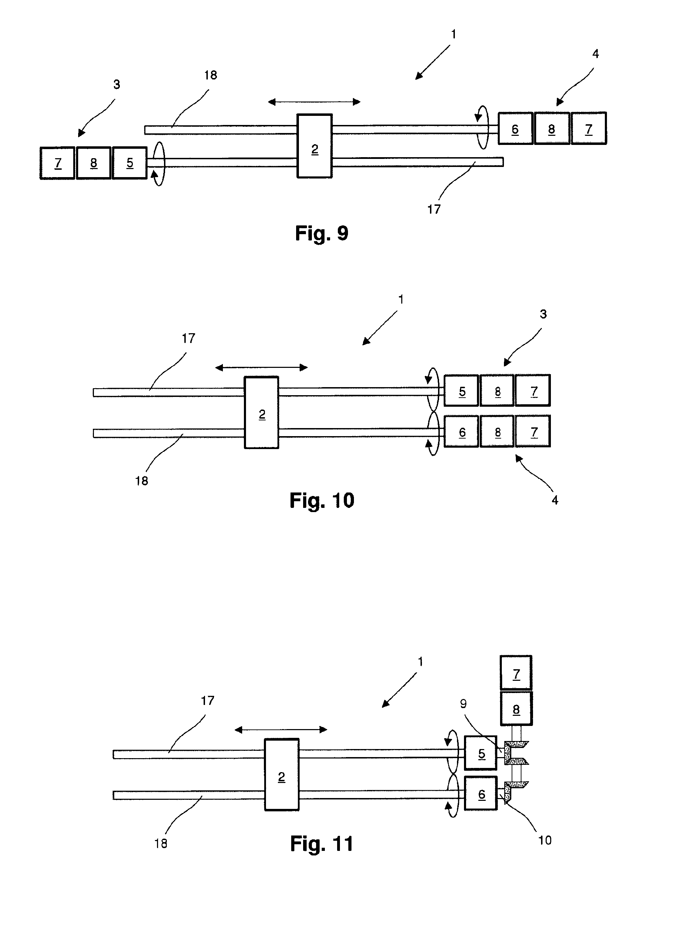

Fig. 9 zeigt ein weiteres Ausführungsbeispiel des erfindungsgemäßen Linearantriebs. Bei dieser Variante sind zwei parallel zueinander verlaufende Spindeln 17 und 18 vorgesehen. Beide Gewindespindeln 17 und 18 kämmen mit einem entsprechenden Gewinde des Läufers 2, welcher durch Drehung der Gewindespindeln entlang deren Längsachse verfahrbar ist. Die beiden Gewindespindeln 17 und 18 können mithilfe der magnetorheologischen Kupplungen 5 und 6 mit den zugehörigen Antriebseinheiten 3 und 4 in Eingriff gebracht werden. Die beiden Antriebseinheiten 3 und 4 sind dabei an unterschieden Enden der beiden Gewindespindeln angeordnet. Damit durch die beiden Antriebseinheiten 3 und 4 entgegengesetzt wirkende Kräfte auf den Läufer aufgebracht werden können, ist es erforderlich, dass entweder die Abtriebswellen der beiden Antriebseinheiten 3 und 4 gegenläufig drehen oder aber die beiden Gewindespindeln 17 und 18 gegenläufige Gewinde aufweisen.

Fig. 10 zeigt eine Abwandlung des Linearantriebs aus Fig. 9, bei der die beiden Antriebseinheiten 3 und 4 am gleichen Ende der beiden Gewindespindeln 17 und 18 angeordnet sind. Der Linearantrieb baut bei dieser Variante etwas kürzer als der Antrieb aus Fig. 9. Die beiden Antriebseinheiten 3 und 4 sowie die zugehörigen magnetorheologischen Kupplungen 5 und 6 sind direkt nebeneinander angeordnet. Es ist daher auch bei dieser Variante möglich, die beiden Antriebseinheiten 3 und 4 durch einen einzigen Elektromotor 7 mit angesetztem Gewinde 8 zu realisieren, so wie es in Fig. 11 gezeigt ist.

Bei sämtlichen gezeigten Ausführungsbeispielen des erfindungsgemäßen Linearantriebs können zur Steuerung nicht dargestellte Ist-Wert-Geber vorgesehen sein. Dabei kann es sich um Drehgeber und/oder Tachometer und/oder Beschleunigungsmesser handeln.

## Patentansprüche

1. Linearantrieb (1) mit einem Stator, einem Läufer (2), und mit zwei zum Antrieb des Läufers (2) vorgesehenen rotativen Antriebseinheiten (3, 4), **dadurch gekennzeichnet, dass** der Linearantrieb (1) ferner zwei magnetorheologische Kupplungen (5, 6) umfasst, wobei die erste Antriebseinheit (3) mittels einer ersten magnetorheologischen Kupplung (5) und die zweite Antriebseinheit (4) mittels einer zweiten magnetorheologischen Kupplung (6) mit dem Läufer (2) koppelbar sind, wobei das Abtriebsdrehmoment der ersten Antriebseinheit (3) entgegengesetzt zum Abtriebsdrehmoment der zweiten Antriebseinheit (4) auf den Läufer (2) wirkt.

2. Linearantrieb (1) nach Anspruch 1, **dadurch gekennzeichnet, dass** der Linearantrieb (1) einen Elektromotor (7) umfasst, der sowohl Teil der ersten Antriebseinheit (3) als auch Teil der zweiten Antriebseinheit (4) ist, wobei der Linearantrieb (1) ferner ein mit dem Elektromotor (7) verbundenes Getriebe (8) aufweist, und wobei das Getriebe (8) zwei gegenläufig drehende Getriebeabtriebswellen (9, 10) umfasst, wovon eine erste Getriebeabtriebswelle (9) mit der ersten magnetorheologischen Kupplung (5), und eine zweite Getriebeabtriebswelle (10) mit der zweiten magnetorheologischen Kupplung (6) gekoppelt ist.

3. Linearantrieb (1) nach Anspruch 1, **dadurch gekennzeichnet, dass** die beiden Antriebseinheiten (3, 4) jeweils einen eigenen Elektromotor (7) umfassen.

4. Linearantrieb (1) nach Anspruch 3, **dadurch gekennzeichnet, dass** die beiden Antriebseinheiten (3, 4) jeweils ein eigenes Getriebe (8) umfassen.

5. Linearantrieb (1) nach einem der Ansprüche 1 bis 4, **dadurch gekennzeichnet, dass** der Linearantrieb (1) eine Steuereinheit zur Ansteuerung der beiden magnetorheologischen Kupplungen (5, 6) umfasst, wobei die Steuereinheit dafür sorgt, dass stets durch beide Antriebseinheiten (3, 4) ein Abtriebsdrehmoment auf den Läufer (2) wirkt.

6. Linearantrieb (1) nach Anspruch 5, **dadurch gekennzeichnet, dass** die Steuereinheit einen Istwertgeber, insbesondere einen Drehgeber und/oder Tachometer und/oder Beschleunigungsmesser, umfasst.

7. Linearantrieb (1) nach einem der Ansprüche 1 bis 6, **dadurch gekennzeichnet, dass** der Läufer (2) eine Zahnstange (11) umfasst, die durch ein mit der ersten Antriebseinheit (3) koppelbares erstes Zahnrad (12) oder Schneckenrad, und durch ein mit der zweiten Antriebseinheit (4) koppelbares zweites Zahnrad (13) oder Schneckenrad angetrieben ist, wobei erste magnetorheologische Kupplung (5) und zweite magnetorheologische Kupplung (6) direkt nebeneinander angeordnet sind.

8. Linearantrieb (1) nach einem der Ansprüche 1 bis 6, **dadurch gekennzeichnet, dass** der Läufer (2) einen Riemen (14) oder ein Seil oder eine Kette umfasst, wobei der Riemen (14) oder das Seil oder die Kette eine geschlossene Schleife (15) bildet, und wobei die beiden Antriebseinheiten (3, 4) in zwei einander gegenüberliegenden Umkehrpunkten (16) der Schleife (15) angeordnet sind.

9. Linearantrieb (1) nach einem der Ansprüche 1 bis 6, **dadurch gekennzeichnet, dass** der Linearantrieb (1) eine Gewindespindel (17) umfasst.

10. Linearantrieb (1) nach Anspruch 9, **dadurch gekennzeichnet, dass** die Gewindespindel (17) drehbar und axial unverschieblich gegenüber dem Stator des Linearantriebs (1) gelagert ist, wobei die Gewindespindel (17) mit zumindest einer der beiden Antriebseinheiten (3, 4) und dem gegenüber dem Stator axial verschieblich gelagerten Läufer (2) in Eingriff steht.

11. Linearantrieb (1) nach Anspruch 10, **dadurch gekennzeichnet, dass** der Linearantrieb (1) eine zweite Gewindespindel (18) umfasst, die parallel zur ersten Gewindespindel (17) und ebenfalls drehbar und axial unverschieblich gegenüber dem Stator des Linearantriebs (1) gelagert ist, wobei die erste Gewindespindel (17) mit dem Läufer (2) und der ersten Antriebseinheit (3), und die zweite Gewindespindel (18) mit dem Läufer (2) und der zweiten Antriebseinheit (4) in Eingriff steht.

12. Linearantrieb nach einem der Ansprüche 1 bis 11, **dadurch gekennzeichnet, dass** die magnetorheologischen Kupplungen (5, 6) jeweils durch ein Differential mit magnetorheologischer Bremse realisiert sind, wobei das Differential ein Eingangsglied und zwei Ausgangsglieder umfasst, und wobei eines der Ausgangsglieder mittels der magnetorheologischen Bremse abbremsbar ist.
